# EUROPEAN PATENT APPLICATION

(11) **EP 2 815 854 A2**
(43) Date of publication of application: **24.12.2014**
(21) Application number: 13002484.7
(22) Date of filing: 10.05.2013
(51) Int. Cl.: B25J 5/00, B62D 55/00, G21D 1/02, G21D 3/04

(54) **Tele-operated robotic post-Fukushima nuclear safety and security compliance enhancement tool**

(71) Applicant: Chitumbo, Ngandwe, 1190 Vienna (AT); Majetic, Vejkoslav, 10000 Zagreb (HR)
(72) Inventor: Chitumbo, Ngandwe, 1190 Vienna (AT); Majetic, Vejkoslav, 10000 Zagreb (HR)

(57) **Abstract**

Water delivery and injection sucking robot; generator and battery-charging robot; CBRNE Robot with capability to collect as well as analyse collected samples (automated sample collection, detection and identification); facilitator tool-box robot (relevance will depend on ease with which other robots can carry out functions based ease of connection process to docking point but do consider inherent valve opening capabilities for both Nitrogen and air Valves); diesel delivery linjection and refilling (for diesel generators and other robots as well as other key infrastructure that may need diesel); mobile diesel generator robotic mover.

## Description

In relation to the the different technologies involved in the initiative, consider their relevance to the compilation of generic EU Nuclear stress-test recommendations (Compilation of EU-stress-test recommendations and suggestions) as shown below with technology relevance appearing in red.

3.2.3 DC Power Supplies The enhancement of the DC power supply. Examples include improving the battery discharge time by upgrading the existing battery, changing/diversifying battery type (increasing resistance to common-mode failures), providing spare/replacement batteries, implementing well-prepared load-shedding/staggering strategies, performing real load testing and on-line monitoring of the status of the batteries and preparing dedicated recharging options (e. g. using portable generators). (T2 and T6 relevance)

3.2.10 Spent Fuel Pool The improvement of the robustness of the spent fuel pool (SFP). Examples include reassessment/upgrading SFP structural integrity, installation of qualified and power-independent monitoring, provisions for redundant and diverse sources of additional coolant resistant to external hazards (with procedures and drills), design of pools that prevents drainage, the use of racks made of borated steel to enable cooling with fresh (un-borated) water without having to worry about possible re-criticality, redundant and independent SFP cooling systems, provision for additional heat exchangers (e. g. submerged in the SFP), an external connection for refilling of the SFP (to reduce the need for an approach linked to high doses in the event of the water falling to a very low level) and the possibility of venting steam in a case of boiling in the SFP. (T1 relevance with potential injection point)

3.2.11 Separation and Independence The enhancement of the functional separation and independence of safety systems. Examples include the elimination of full dependence of important safety functions on auxiliary systems such as service water and the introduction of an alternate source of cooling. (T1 relevance with potential injection point).

3.2.13 Mobile Devices The provision of mobile pumps, power supplies and air compressors with prepared quick connections, procedures, and staff training with drills. Mobile devices are intended to enable the use of existing safety equipment, enable direct feeding of the primary or secondary side, allow extended use of instrumentation and operation of controls, allow effective fire-fighting, and ensure continued emergency lighting. The equipment should be stored in locations that are safe and secure even in the event of general devastation caused by events significantly beyond the design basis (this also applies to Topic 3 recommendations). (In essence the technologies fit into this fundamental heading so consider here the relevance of T1, T2, T4, T5 and T6).

3.2.15 Multiple Accidents The enhancement of the capability for addressing accidents occurring simultaneously on all plants of the site. Examples include assuring preparedness and sufficient supplies, adding mobile devices and fire trucks and increasing the number of trained and qualified staff (this also applies to Topic 3 recommendations). (consider here T1, T2,T3, T4, T5 and T6).

3.2.17 Further Studies to Address Uncertainties The performance of further studies in areas where there are uncertainties. Uncertainties may exist in the following areas:
- The integrity of the SFP and its liner in the event of boiling or external impact.
- The functionality of control equipment (feed-water control valves and SG relief valves, main steam safety valves, isolation condenser flow path, containment isolation valves as well as depressurisation valves) during the SBO to ensure that cooling using natural circulation would not be interrupted in a SBO (this is partially addressed in recommendation 3.2.10).(consider T2 and T6 relevance)
- The performance of additional studies to assess operation in the event of widespread damage, for example, the need different equipment (e.g. bulldozers) to clear the route to the most critical locations or equipment. This includes the logistics of the external support and related arrangements (storage of equipment, use of national defence resources, etc.)(all the technologies are of relevance in this instance).

3.3.9 Improved Communications: The improvement of communication systems, both internal and external, including transfer of severe accident related plant parameters and radiological data to all emergency and technical support centre and regulatory premises. (T3 relevance)

3.3.11 Large Volumes of Contaminated Water: The conceptual preparations of solutions for post-accident contamination and the treatment of potentially large volumes of contaminated water. (T1 relevance)

3.3.13 On Site Emergency Centre: The provision of an on-site emergency centre protected against severe natural hazards and radioactive releases, allowing operators to stay onsite to manage a severe accident. (The technology principle ensures that tasks are done irrespective of sever natural hazards and radioactive releases and limits the need for direct human presence).

3.3.16 Severe Accident Studies: The performance of further studies to improve SAMGs. Examples of areas that could be improved with further studies include:
- The availability of safety functions required for SAM under different circumstances (T1,T2,T5,T6 and potentially T4 depending on efficiency of connecting points). Accident timing, including core melt, reactor pressure vessel (RPV) failure,basemat melt-through, SFP fuel un-covery, etc (T1,T2,T5 and T6). • PSA analysis, including all plant states and external events for PSA levels 1 and 2. • Radiological conditions on the site and associated provisions necessary to ensure MCR and ECR habitability as well as the feasibility of AM measures in severe accident conditions, multi-unit accidents, containment venting, etc (T1,T2,T3,T5,T6). • Core cooling modes prior to RPV failure and of re-criticality issues for partly damaged cores, with un-borated water supp!y(T1).• Phenomena associated with cavity flooding and related steam explosion risks. • Engineered solutions regarding molten corium cooling and prevention of basemat melt-through. •Severe accident simulators appropriate for NPP staff training.
(4) Examples of relevance points of the proposed technology as demonstrated by the French National Action Plan. These are to be found in the initial submission that introduces the concept that is to be subject matter of the patent. In this regard it should be clear form the above that the technology/claims proposed are of direct solution relevance to the issues raised here as well.

Other ASN requirements relative to severe accident management

ECS - 29: Reinforcement of the U5 venting-filtration system ("sand-bed filter") licensee shall submit to ASN a detailed study of the possible improvements to the U5 venting-filtration system, taking account of the following points (there are more points but I have just isolated the one relevant to this initiative):
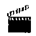 radiological consequences of opening the device, in particular for accessibility of the site, and the radiological atmosphere of the emergency premises and control room. Consider that with robotic applications in this instance we would essentially be guaranteeing accessibility to the site for the purposes of sever accident management (SAM).

ASN requirement

### ECS - 31: Modifications to ensure facility management further to releases

Wording of the requirement and state of progress: See §1.3.3. Comment: This requirement provides for the constitution of a file presenting the planned modifications on the site to ensure that in the event of a release of dangerous substances or opening of the U5 venting-filtration system, the operation and monitoring of all the facilities on the site is guaranteed until a sustainable safe state is reached.

This aspect would also give us a way in as such circumstances would seek to put a considerable strain on human based intervention to carry out the relevant tasks. Here we would be looking for our technology to considerably contribute to these aspects. Under facility operation here it can be understood that what is also being referred to are potential severe accident management procedures that may fall under FLEX or B5B type tasks.

### 1.2.10 Spent fuel pool

Peer Review: The improvement of the robustness of the spent fuel pool (SFP). Examples include reassessment/upgrading SFP structural integrity, installation of qualified and power-independent monitoring, provisions for redundant and diverse sources of additional coolant resistant to external hazards (with procedures and drills), design of pools that prevents drainage, the use of racks made of borated steel to enable cooling with fresh (unborated) water without having to worry about possible re-criticality, redundant and independent SFP cooling systems, provision for additional heat exchangers (e. g. submerged in the SFP), an external connection for refilling of the SFP (to reduce the need for an approach linked to high doses in the event of the water falling to a very low level) and the possibility of venting steam in a case of boiling in the SFP.

Here if you consider the potential circumstances pointed out in ECS-31 above and ESC 29, and then you consider the the point made in 1.2.10 concerning an external connection for refilling the SFP, the potential relevance of the technology we are prosing can be said to also be evident.

Other ASN requirements relative to severe accident management

### ECS - 35.1 and II: Feasibility of emergency management actions in extreme situations

The licensee shall define the actions required for management of the extreme situations studied in the stress tests. It shall check that these actions can effectively be carried out given the intervention conditions likely to be encountered in such scenarios. It shall for instance take account of the relief of the emergency teams and the logistics necessary for the interventions. It shall specify any material or organisational adaptations envisaged.

This clearly shows that the feasibility of human intervention is an issue that has still not been resolved. In this regard, please also consider the 14.1.3 form the national stress-test final report.

### 14.1.3 Identification of factors that can hinder accident management and the resulting constraints

In the CSA specifications, ASN asked EDF to evaluate the envisaged accident management measures considering the situation such as it could occur on the site:
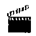 extensive destruction of infrastructures around the facility, including the means of communication (making technical support and personnel reinforcement from outside the site more difficult);
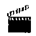 the disruption of work efficiency (including the impact on the accessibility and habitability of the main and secondary control rooms, the premises used by the emergency teams and any area required to be accessible for accident management) caused by high dose rates in the rooms, by radioactive contamination and the destruction of certain facilities on the site;
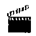 the feasibility and efficiency of the accident management measures in case of external hazards (earthquakes, flooding);
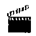 electrical power supply outage; 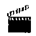 potential failure of the instrumentation; 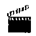 the impact of the other neighbouring facilities on the site.
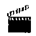 Extensive destruction of infrastructures around the facility:

With regard to the envisaged accident management measures in the event of extensive destruction of the infrastructures around the facility, EDF indicates in the CSA reports that its emergency organisation does not include a specific response structure for this situation, nor to clear the site. In the event of major damage to roads and civil engineering structures, EDF calls upon the public authorities who, in addition to the PPIs specific to the emergency situation, implement the provisions of the "ORSEC" national emergency response plan. The aim of these provisions is to facilitate site access for the duty teams.

To cope with the extreme case of total defaulting of the duty personnel or failure of the communication means (particularly with the exterior) used during deployment of the emergency organisation, EDF indicates that it is currently conducting complementary studies on:
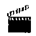 reinforcing the skills of the operating team so that it can take the necessary minimum measures to prevent or delay core meltdown;
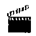 reinforcing the communication links by having communication means with greater autonomy and which are earthquake- and flood-resistant;
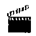 the creation of a Nuclear Rapid Intervention Force (FARN);
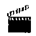 taking into consideration the working conditions of the operating personnel, the on-call personnel and the FARN. They must be able to guarantee the health and safety of the workers. The psychological aspect is taken into account.

Consider that given the potential of the technology to be stored onsite and deployed by FARN form their location, the technology essentially also provides an extra safety net in dealing with the issues that have been raised by 14.1.3. Please note in this regard that further to the technical function all the technologies, they also have the ability to carry all sorts of detectors/ dosemeters as well as the ability to clear substantial debris. The potential of our technology to contribute to resolving some of these issues is self-evident.

### 1.2.15 Multiple accidents

Peer Review: The enhancement of the capability for addressing accidents occurring simultaneously on all plants of the site. Examples include assuring preparedness and sufficient supplies, adding mobile devices and fire trucks and increasing the number of trained and qualified staff (this also applies to Topic 3 recommendations).

Analysis of the management of multiple accidents affecting all or part of the reactors of a given site simultaneously has called into question the previously implemented material and organisational provisions. In this context ASN has set the following requirements. Comment: The licensee shall take all necessary measures to ensure that the emergency organisation and resources are operational in the event of an accident affecting all or some of the facilities on a given site.

Here the issue addressed in the presentation of the effects of a situation on one facility on another or others shows that in essence our technology would seek to make sure that optimal intervention is always possible.

### 1.2.17 Additional studies in areas where uncertainties remain

Peer Review: The performance of further studies in areas where there are uncertainties. Uncertainties may exist in the following areas:
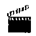 The integrity of the SFP and its liner in the event of boiling or external impact.
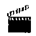 The functionality of control equipment (feed-water control valves and SG relief valves, main steam safety valves, isolation condenser-flow path, containment isolation valves as well as depressurisation valves) during the SBO to ensure that cooling using natural
   circulation would not be interrupted in a SBO (this is partially addressed in recommendation 3.2.10).
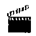 The performance of additional studies to assess operation in the event of widespread damage, for example, the need different equipment (e.g. bulldozers) to clear the route to the most critical locations or equipment. This includes the logistics of the external
   support and related arrangements (storage of equipment, use of national defence resources, etc.).

The initiative is of relevance in relation to the last point in the peer review above and the first part of the first point.

### 1.3 SEVERE ACCIDENT MANAGEMENT

### 1.3.3 Analysis of the provisions for severe accident management further to an extreme external hazard

Peer review: The systematic review of SAM provisions focusing on the availability and appropriate operation of plant equipment in the relevant circumstances, taking account of accident initiating events, in particular extreme external hazards and the potential harsh working environment.

In addition to the elements mentioned in § 1.3.2, ASN has instructed EDF to check that the emergency management actions planned for in extreme situations studied for the stress tests are effectively achievable. It also instructed EDF to take into consideration the industrial risks induced in extreme situations by nearby risk-prone facilities.

These aspects further emphasize the possibility of the human intervention hindering circumstances and add value to our initiative. See also below.

### ECS - 14.I: Integration of industrial risks in extreme situations

I. No later than 31 December 2013, the licensee shall supplement its ongoing studies with the inclusion of the risk arising from activities taking place near its facilities, in the extreme situations studied by the stress tests and in conjunction with neighbouring licensees responsible for these activities (nuclear facilities, installations classified on environmental protection grounds or other facilities liable to constitute a hazard). By that deadline, the licensee shall propose any modifications to be made to its facilities or their operating procedures as a result of this analysis.

In this regard, please also consider text below from (ASN) opinion n° 2012-AV-0139 of 3rd January 2012 concerning the complementary safety assessments of the priority nuclear facilities in the light of the accident that occurred on the nuclear power plant at Fukushima Daiichi.

Finally, ASN considers that the risks induced by other industrial activities present in the vicinity of nuclear facilities need to be reassessed. When faced with extreme natural phenomena such as those of Fukushima, these activities could constitute major sources of hazards for the neighbouring nuclear facilities, or their releases could complicate access by the emergency services. ASN will be requiring the licensees of nuclear facilities to enhance their existing studies by including the effects on their installations of high-risk activities located nearby, in the event of natural hazards on an exceptional scale, jointly with those responsible for these activities.

### 1.3.12 Radiation protection

Peer Review: The provision for radiation protection of operators and all other staff involved in the SAM and emergency arrangements.

CNS: Improving their radiation monitoring and communications capabilities and enhancing public communications, such as via dedicated public websites.

Among the technical and organisational provisions of the hardened safety core, and pursuant to the ASN requirement, the licensee must integrate the provisions necessary to ensure the availability of the active dosimetry equipment, the measuring instruments for radiation protection and the personal and collective protective equipment. Furthermore, the verification of the feasibility of the human actions prescribed by ASN must take into account the radiation protection of the persons involved. Lastly, ASN has instructed the licensee to check that it is possible to monitor and manage the facilitates after radioactive releases while taking into account the radiation protection of the persons involved.

Due to the radiation aspects here and the concern for the feasibility of human action, we would also be looking to present a solution in this aspect. This is also highlighted by the ASN issue raised below.

### ASN requirement

### ECS - 31: Modifications to ensure facility management further to releases

Before 31 December 2012, the licensee shall send ASN a file presenting the planned modifications on its site to ensure that, in the event of release of dangerous substances or opening of the U5 venting- filtration system, operation and monitoring of all the facilities on the site are guaranteed until a long- term safe state is reached; the corresponding deployment schedule shall also be provided.

In this regard please also see issues raised below.

### ASN requirement

### ECS - 31: Modifications to ensure facility management further to releases

The licensee shall send ASN a file presenting the planned modifications on its site to ensure that, in the event of release of dangerous substances or opening of the U5 venting- filtration system, operation and monitoring of all the facilities on the site are guaranteed until a long- term safe state is reached; the corresponding deployment schedule shall also be provided.

Consider also text below.

### ASN requirement

ECS - 35.I and II: Feasibility of emergency management actions in extreme situations Comment: The planned emergency management actions in extreme situations must be effectively achievable by the personnel under the conditions of intervention.

In relation to the aspect that the technology can be stored onsite for deployment and be controlled by FARN staff if need be, it would mean that FARN would be in a better position to intervene and relieve onsite staff in good time and even if there is considerable hindrance in relation to site access. See text below.

### 1.3.14 Support to the personnel on site

Peer Review: Rescue teams and adequate equipment to be quickly brought on site in order to provide support to local operators in case of a severe situation.

CNS: Upgrading regional, off-site and on-site emergency response centres.

The licensee has planned to reinforce the current emergency organisation, particularly by setting up a Nuclear Rapid Response Force ("FARN" in its French acronym) with material and human resources. The FARN is a national organisation specific to the licensee, which will be capable of rapidly providing material and human aid to one or more sites in difficulty simultaneously. This organisation must notably allow the relief of the teams present on the site if it is impossible for the normally planned relief teams to fulfil this function or to get to the accident-stricken site. ASN has set the following requirement.

ASN requirement

### ECS - 36: The Nuclear Rapid Response Force (FARN)

Wording of the requirement and state of progress: See § 1.2.13

Comment: During the meetings of 30 March and 8 November 2012, the licensee presented ASN with its planned measures in order to have specialised teams capable of relieving the shift teams and deploying emergency response resources in less than 24 hours, with operations starting on the site within 12 hours following their mobilisation. This system may be common to several of the licensee's nuclear sites.

In essence the issue that our technology addresses is contained in the "studies relevant to accident management" below. This in effect should further strengthen our ability to convince clients to explore the solution we intend to present.

### 1.3.16 Studies relative to severe accidents

Peer Review: The performance of further studies to improve SAMGs. Examples of areas that could be improved with further studies include:
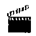 The availability of safety functions required for SAM under different circumstances.
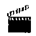 Accident timing, including core melt, reactor pressure vessel (RPV) failure, basemat melt-through, SFP fuel uncovery, etc. 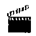 PSA analysis, including all plant states and external events for PSA levels 1 and 2. 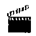 Radiological conditions on the site and associated provisions necessary to ensure MCR and ECR habitability as well as the feasibility of AM measures in severe accident conditions, multi-unit accidents, containment venting, etc. 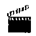 Core cooling modes prior to RPV failure and of re-criticality issues for partly damaged cores, with un-borated water supply. 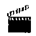 Phenomena associated with cavity flooding and related steam explosion risks. 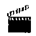 Engineered solutions regarding molten corium cooling and prevention of basemat melt-through. 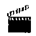 Severe accident simulators appropriate for NPP staff training.

CNS: Developing probabilistic safety assessments to identify additional accident management measures or changes in radiation protection measures for workers on the site that might be needed to perform necessary activities in the event of a severe accident.

In relation to the the different technologies involved in the initiative, consider their relevance to the compilation of generic EU Nuclear stress-test recommendations (Compilation of EU-stress-test recommendations and suggestions) as shown below with technology relevance appearing in red.

3.2.3 DC Power Supplies The enhancement of the DC power supply. Examples include improving the battery discharge time by upgrading the existing battery, changing/diversifying battery type (increasing resistance to common-mode failures), providing spare/replacement batteries, implementing well-prepared load-shedding/staggering strategies, performing real load testing and on-line monitoring of the status of the batteries and preparing dedicated recharging options (e. g. using portable generators). (T2 and T6 relevance)

3.2.10 Spent Fuel Pool The improvement of the robustness of the spent fuel pool (SFP). Examples include reassessment/upgrading SFP structural integrity, installation of qualified and power-independent monitoring, provisions for redundant and diverse sources of additional coolant resistant to external hazards (with procedures and drills), design of pools that prevents drainage, the use of racks made of borated steel to enable cooling with fresh (un-borated) water without having to worry about possible re-criticality, redundant and independent SFP cooling systems, provision for additional heat exchangers (e. g. submerged in the SFP), an external connection for refilling of the SFP (to reduce the need for an approach linked to high doses in the event of the water falling to a very low level) and the possibility of venting steam in a case of boiling in the SFP. (T1 relevance with potential injection point)

3.2.11 Separation and Independence The enhancement of the functional separation and independence of safety systems. Examples include the elimination of full dependence of important safety functions on auxiliary systems such as service water and the introduction of an alternate source of cooling. (T1 relevance with potential injection point).

3.2.13 Mobile Devices The provision of mobile pumps, power supplies and air compressors with prepared quick connections, procedures, and staff training with drills. Mobile devices are intended to enable the use of existing safety equipment, enable direct feeding of the primary or secondary side, allow extended use of instrumentation and operation of controls, allow effective fire-fighting, and ensure continued emergency lighting. The equipment should be stored in locations that are safe and secure even in the event of general devastation caused by events significantly beyond the design basis (this also applies to Topic 3 recommendations). (In essence the technologies fit into this fundamental heading so consider here the relevance of T1, T2, T4, T5 and T6).

3.2.15 Multiple Accidents The enhancement of the capability for addressing accidents occurring simultaneously on all plants of the site. Examples include assuring preparedness and sufficient supplies, adding mobile devices and fire trucks and increasing the number of trained and qualified staff (this also applies to Topic 3 recommendations). (consider here T1, T2,T3, T4, T5 and T6).

3.2.17 Further Studies to Address Uncertainties The performance of further studies in areas where there are uncertainties. Uncertainties may exist in the following areas:
- The integrity of the SFP and its liner in the event of boiling or external impact.
- The functionality of control equipment (feed-water control valves and SG relief valves, main steam safety valves, isolation condenser flow path, containment isolation valves as well as depressurisation valves) during the SBO to ensure that cooling using natural circulation would not be interrupted in a SBO (this is partially addressed in recommendation 3.2.10).(consider T2 and T6 relevance)
- The performance of additional studies to assess operation in the event of widespread damage, for example, the need different equipment (e.g. bulldozers) to clear the route to the most critical locations or equipment. This includes the logistics of the external support and related arrangements (storage of equipment, use of national defence resources, etc.)(all the technologies are of relevance in this instance).

3.3.9 Improved Communications: The improvement of communication systems, both internal and external, including transfer of severe accident related plant parameters and radiological data to all emergency and technical support centre and regulatory premises. (T3 relevance)

3.3.11 Large Volumes of Contaminated Water: The conceptual preparations of solutions for post-accident contamination and the treatment of potentially large volumes of contaminated water. (T1 relevance)

3.3.13 On Site Emergency Centre: The provision of an on-site emergency centre protected against severe natural hazards and radioactive releases, allowing operators to stay onsite to manage a severe accident. (The technology principle ensures that tasks are done irrespective of sever natural hazards and radioactive releases and limits the need for direct human presence).

3.3.16 Severe Accident Studies: The performance of further studies to improve SAMGs. Examples of areas that could be improved with further studies include:
- The availability of safety functions required for SAM under different circumstances (T1,T2,T5,T6 and potentially T4 depending on efficiency of connecting points). • Accident timing, including core melt, reactor pressure vessel (RPV) failure,basemat melt-through, SFP fuel un-covery, etc (T1,T2,T5 and T6). • PSA analysis, including all plant states and external events for PSA levels 1 and 2. • Radiological conditions on the site and associated provisions necessary to ensure MCR and ECR habitability as well as the feasibility of AM measures in severe accident conditions, multi-unit accidents, containment venting, etc (T1,T2,T3,T5,T6). Core cooling modes prior to RPV failure and of re-criticality issues for partly damaged cores, with un-borated water supp!y(T1). • Phenomena associated with cavity flooding and related steam explosion risks. • Engineered solutions regarding molten corium cooling and prevention of basemat melt-through. • Severe accident simulators appropriate for NPP staff training.

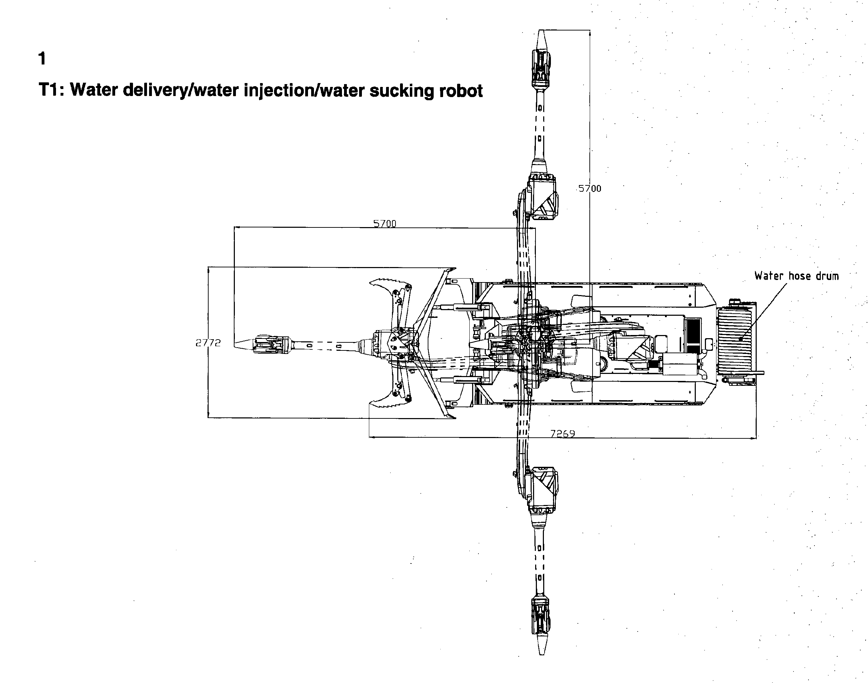

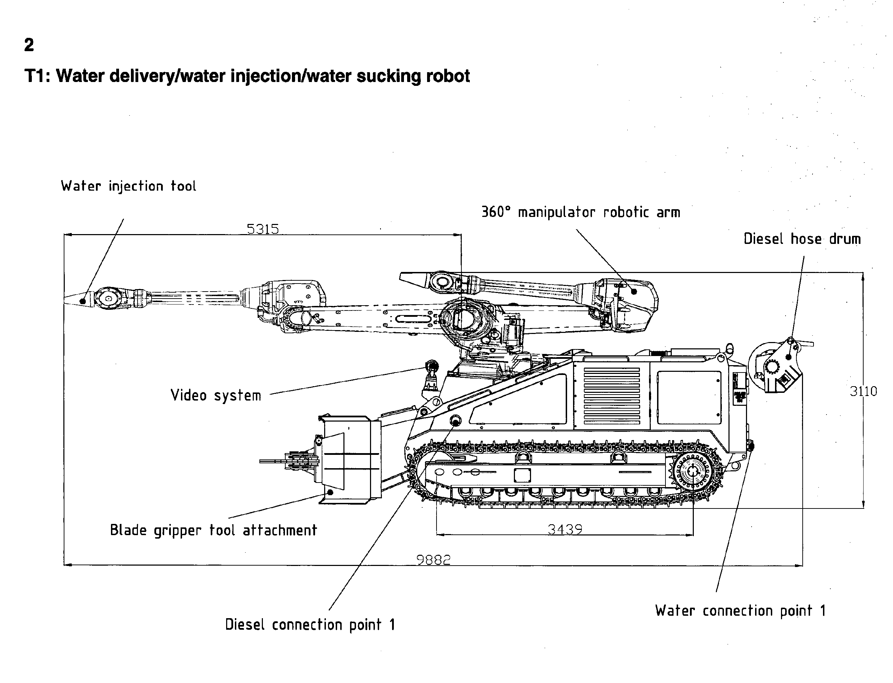

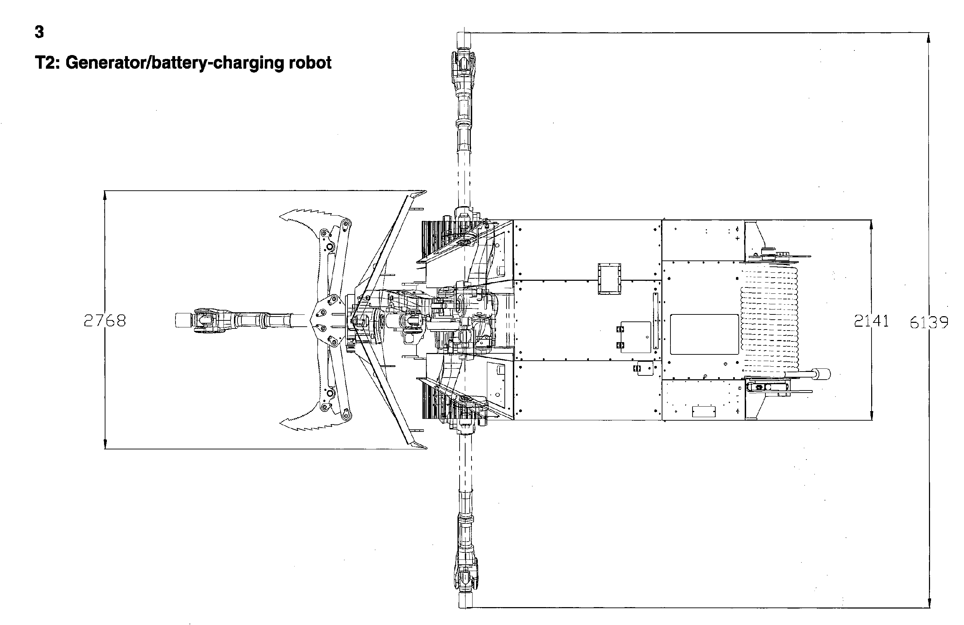

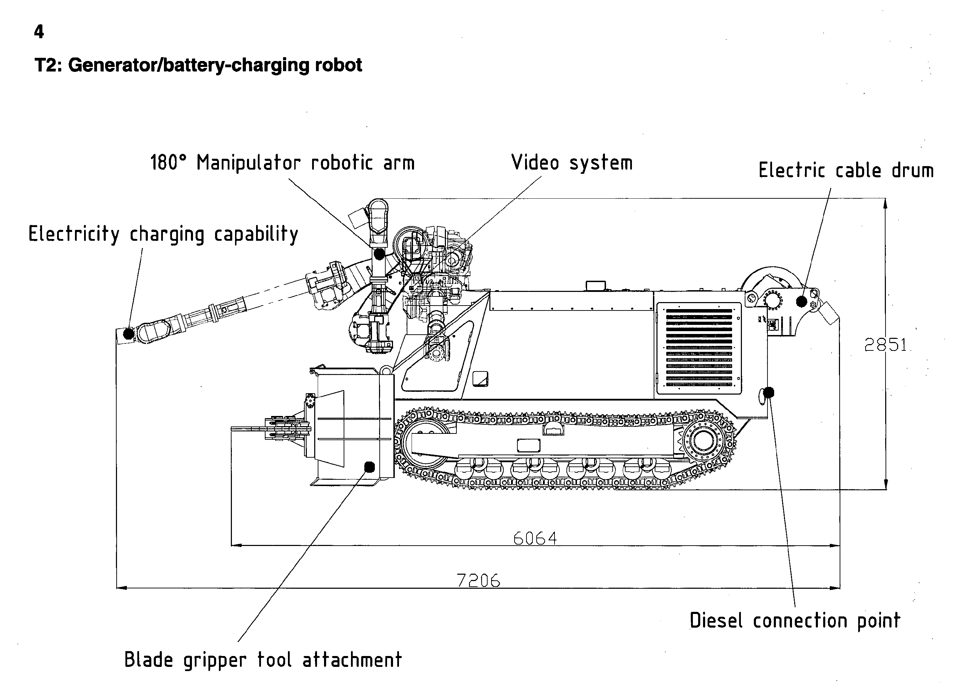

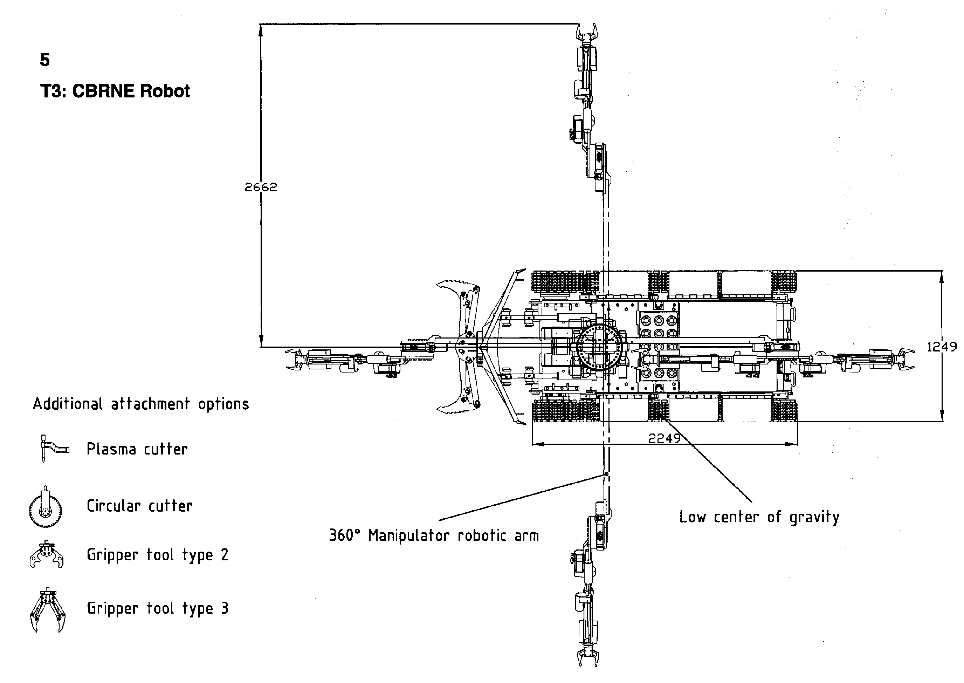

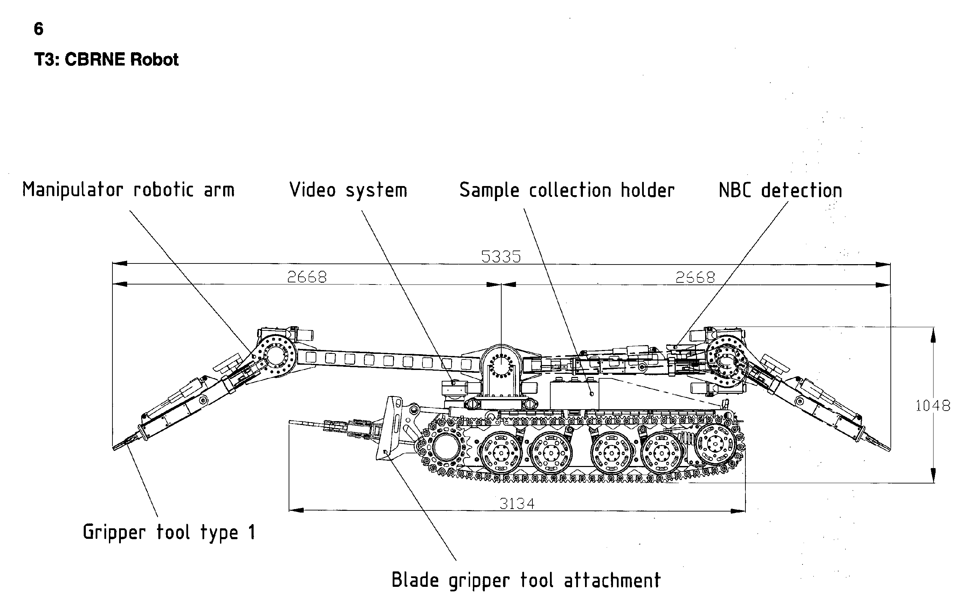

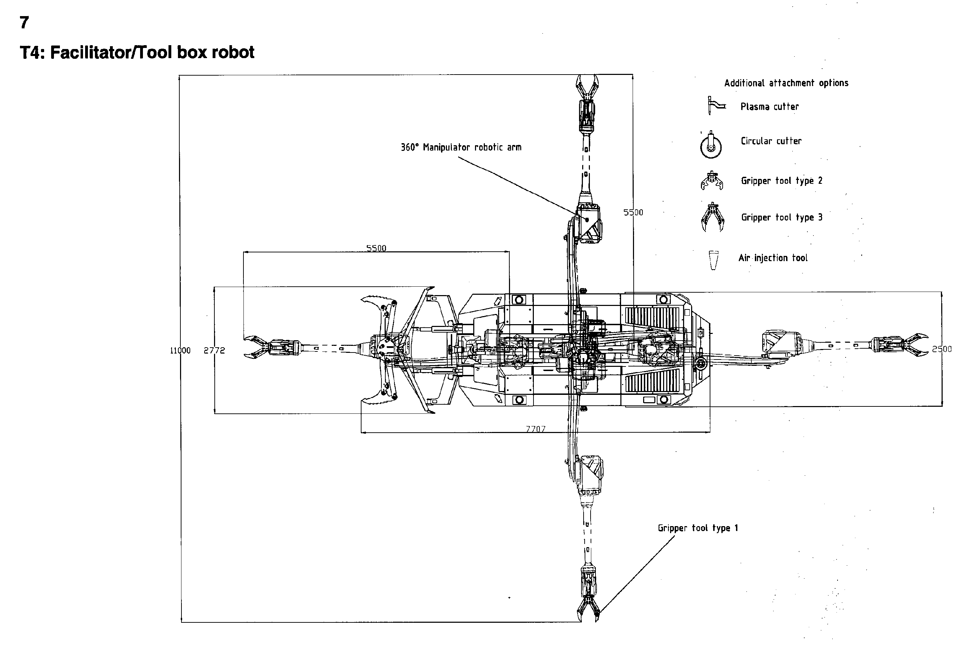

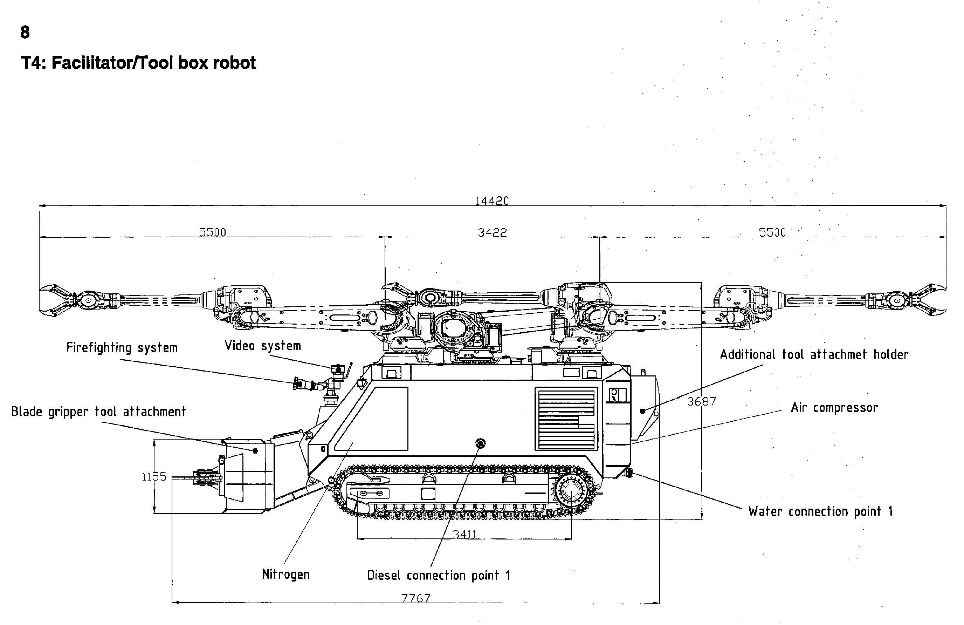

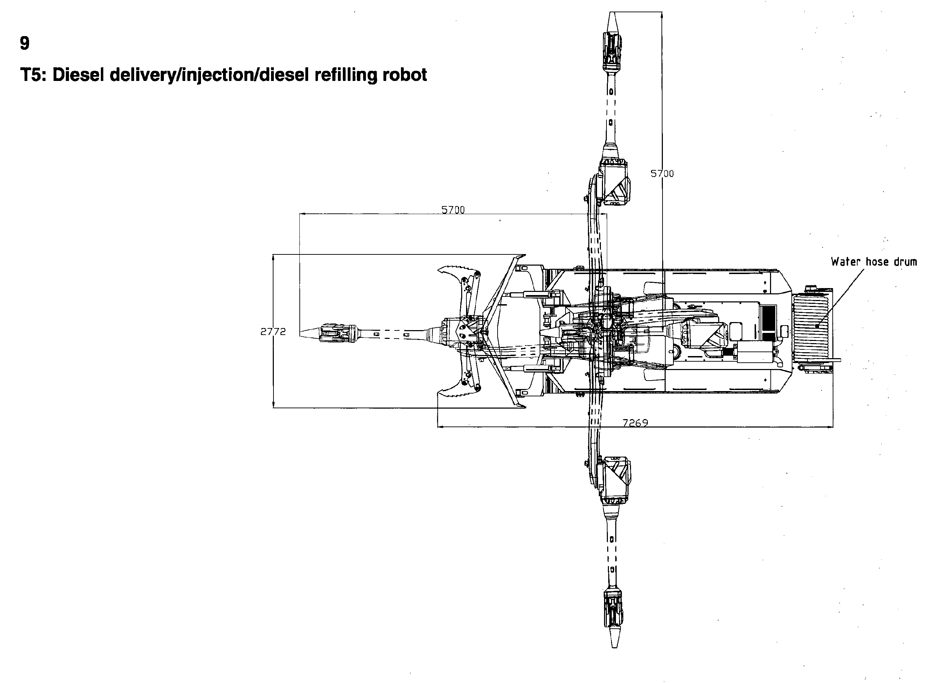

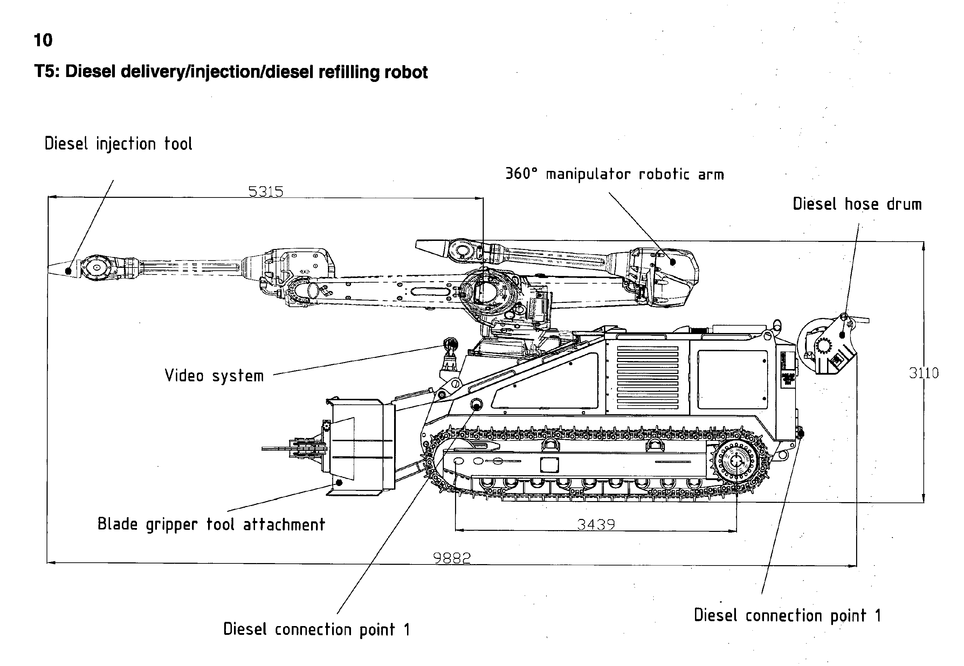

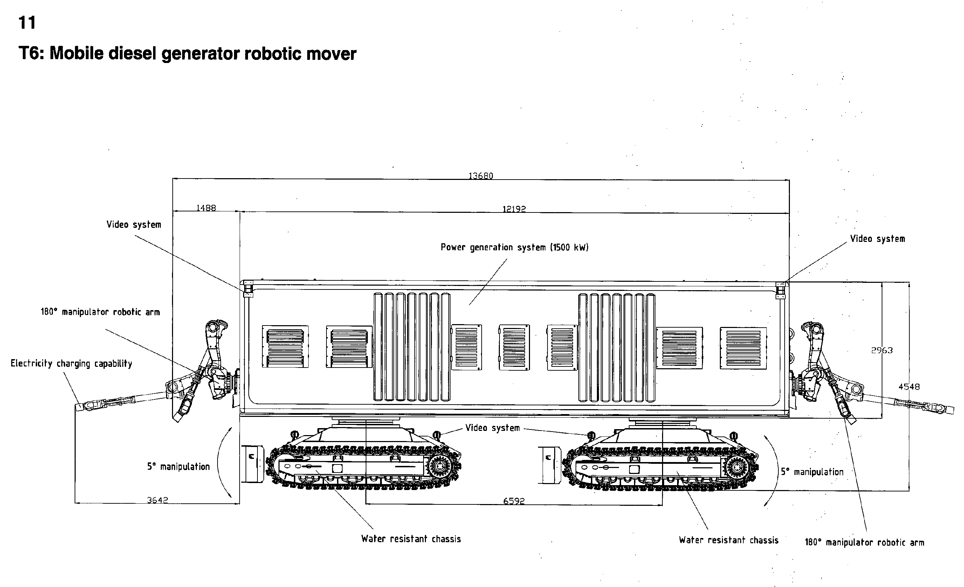

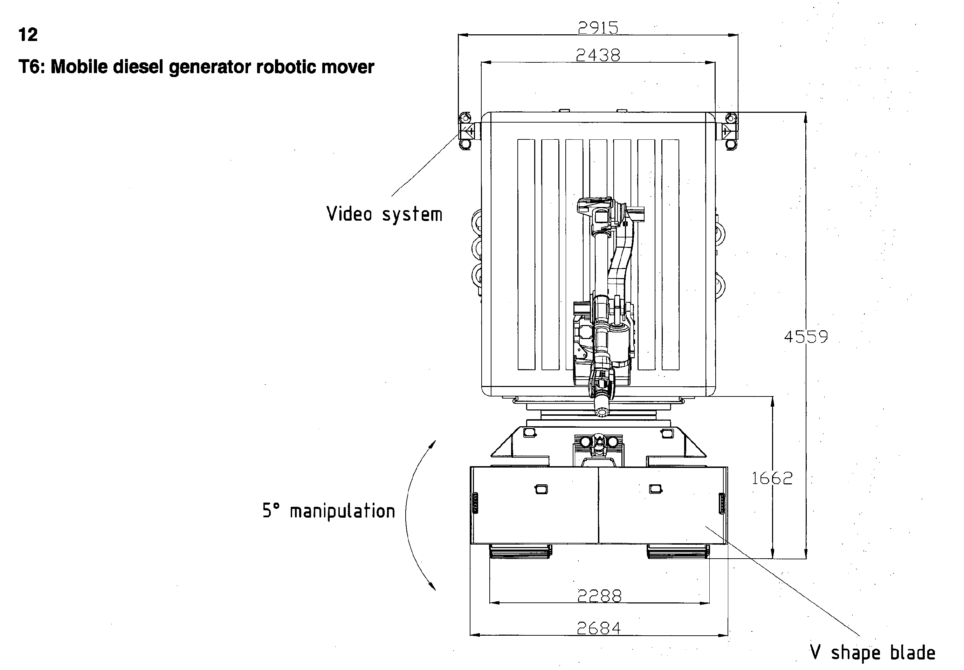

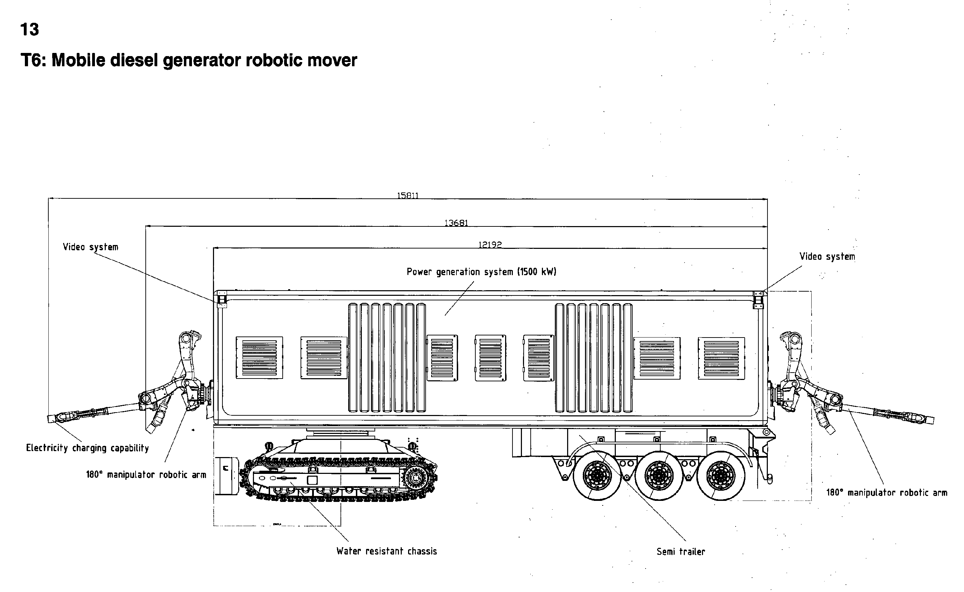

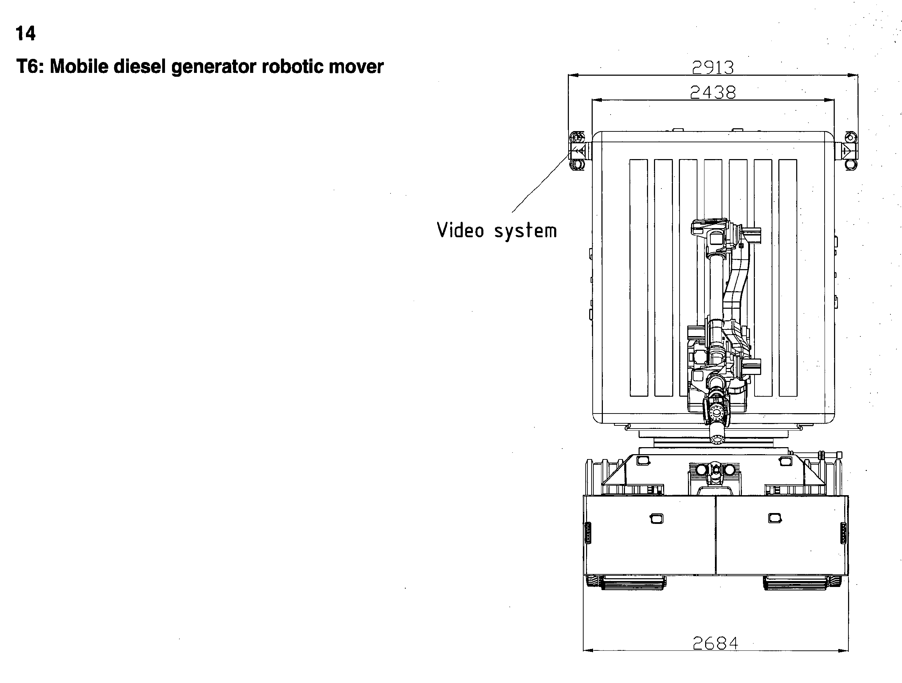

## Claims

**1.** (T1) water(also can carry and inject/deliver borated water) delivery/water injection/water sucking robot, (T2) generator/battery-charging robot, (T3) CBRNE Robot (with capability to collect as well as analyse collected samples (automated sample collection, detection and identification), (T4) facilitator/tool-box robot (relevance will depend on ease with which other robots can carry out functions based ease of connection process to docking point but do consider inherent valve opening capabilities for both Nitrogen and air Valves), (T5) diesel delivery/injection/diesel refilling (for diesel generators and other robots as well as other key infrastructure that may need diesel) please consider that the internal part of diesel injection machine will be completely different, we will be using different pumps and different materials as there are special regulations that are used for that, called ADR norms. However the design of the machine from an external perspective will look like the (T1) robot, (T6) Mobile diesel generator robotic mover. It should be noted the relevance of (T4) will to a great extent depend on the ease with which the technology will be able to connect to nuclear power plant infrastructure and this will in turn depend to a large extent on the nature of the design of the connection points. For some insight into the nature of the problems that the technology aims to resolve form a technical stand point please refer to Appendix B, C, D and F of the FLEX documentation and the technical specifications to be found all throughout B5B documentation. So all in all this creates a list of 6 claims.
